Europäisches Patentamt

European Patent Office

Office européen des brevets

(19)

(11) Publication number: **0 156 402**
**B1**

(12) **EUROPEAN PATENT SPECIFICATION**

(45) Date of publication of patent specification: **11.05.88**

(21) Application number: **85200046.2**

(22) Date of filing: **18.01.85**

(51) Int. Cl.⁴: **G 01 L 3/14,** F 16 H 11/06,
G 01 L 3/10

(54) **Device for determining the torque transmitted between a set of conical disks of a continuously variable transmission and the shaft thereof.**

(30) Priority: **02.02.84 NL 8400324**

(43) Date of publication of application:
**02.10.85 Bulletin 85/40**

(45) Publication of the grant of the patent:
**11.05.88 Bulletin 88/19**

(84) Designated Contracting States:
**AT DE FR GB IT SE**

(56) References cited:
**DE-A-2 928 155**
**DE-A-2 939 620**
**GB-A-1 178 394**
**GB-A-1 265 500**
**NL-A-8 103 554**
**US-A-4 275 588**

(73) Proprietor: **VARICAR B.V.**
**Steenovenweg 1**
**NL-5700 MC Helmond (NL)**

(72) Inventor: **van Rooy, Jacobus Hubertus Maria**
**201 Opwettensweg**
**Nuenen (NL)**

(74) Representative: **Timmers, Cornelis Herman**
**Johannes**
**EXTERPATENT Willem Witsenplein 4**
**NL-2596 BK 's-Gravenhage (NL)**

Courier Press, Leamington Spa, England.

## Description

This invention relates to a device as disclosed in the preamble of claim 1.

Such a device is known from NL—A—8103554. This publication proposes to use as interconnecting element a torque measuring device of the kind as described in GB—A—1178394. A device of this kind comprises two members, each connected to a shaft and between which a relative angular movement is permitted; the respective faces of these members are directed towards each other and are separated from each other by fluid under pressure. During operation the fluid-pressure is a measure for the torque transmitted through the device from the one shaft to the other.

Such a device is, in fact, not very well suited to be used in a continuously variable transmission because it takes up a relatively large space and is sensitive for high temperatures which tend to influence the properties of the pressure fluid.

Furthermore this device is relatively complicated.

The invention aims to provide an improved device of the kind as described above which has a simple structure and takes up but little space so that it can easily be incorporated in a continuously variable transmission. According to the invention this aim is obtained by the measures as described in the characterizing clause of claim 1.

During operation the interconnecting element will twist more or less, dependent upon the transmitted torque so that the mutual position of the outwardly directed teeth with respect to the opposite, stationary, teeth will change and a phase shift will occur between the respective measuring signals supplied by the respective windings. This phase shift is a measure for the transmitted torque.

Such a device is insensitive for high temperatures and resistant for the lubricating materials used in the transmission.

The invention also provides a continuously variable transmission with a device as described above and with a structure as described in claims 1—4.

A simple embodiment is described in claim 5, while other embodiments are described in claims 6—8.

It is observed that DE—A1—2939620 describes a torque measuring device comprising a cylindrical element provided with circumferential incisions and incorporated in a shaft for measuring the torque transmitted by said shaft. This device is, however, based upon the principle of measuring the change of the axial length of the shaft in which the device is incorporated. Such a measurement is, however, much less sensitive than the solution proposed by the invention.

GB—A—1265500 describes a device for measuring the torque in a shaft comprisig two toothrings with radially outwardly directed teeth, each cooperating with a stationary toothring provided with a winding. During operation the phase shift between the signals generated in the respective windings, which depends upon the twist of the shaft and thus upon the transmitted torque, is measured. This device is unsensitive and only suited for measuring high torque values; furthermore the structure of the stationary toothrings differs from the one proposed by the invention.

The invention is elucidated on the hand of the drawings.

Fig. 1 is a longitudinal section through a first embodiment according to the invention;

Fig. 2 is a longitudinal section through a second embodiment according to the invention;

Fig. 3 is a longitudinal section through a third embodiment according to the invention;

Fig. 4a is an end-view of the teethrings used according to the invention;

Fig. 4b is a section through the line IVa—IVa in Fig. 4a;

Fig. 5 gives the circuit for evaluating the measuring signals;

Fig. 6 is a section through the connecting element used according to the invention.

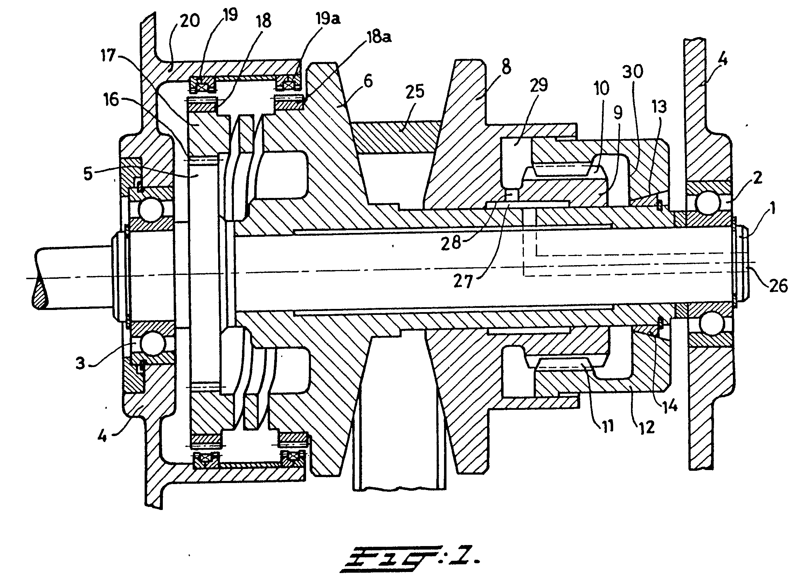

Figure 1 shows an embodiment in which the total torque, transmitted by the two conical disks of one half of a continuously variable transmission to the shaft thereof can be determined. The shaft of this transmission-half is denoted with reference numeral 1 and is supported by means of roller bearings 2, 3 in the housing 4. To the shaft 1 is fixed the flange 5 and, rotatable but not shiftable with regard to the shaft, the conical pulley disk 6 which continues into a bearing bush which carries the second pulley disk 8, the position of which can be adjusted in axial direction. This conical pulley disk 8 is connected to a bush 9 having radially outwardly directed teeth 10 cooperating with radially inwardly directing teeth 11 on the driver 12 of which axial movement is prevented by the combination of the conical abutment surface 13 and the conical pressure ring 14 fixed to the shaft 1.

Between the flange 5 and the conical disk 6 is the twistable interconnecting element 15 which, as the figure shows is shaped as a bush with circumferential incisions, the righthand end of this bush is solid with the conical disk 6 and the lefthand end thereof is fixed at 16 to the flange 5.

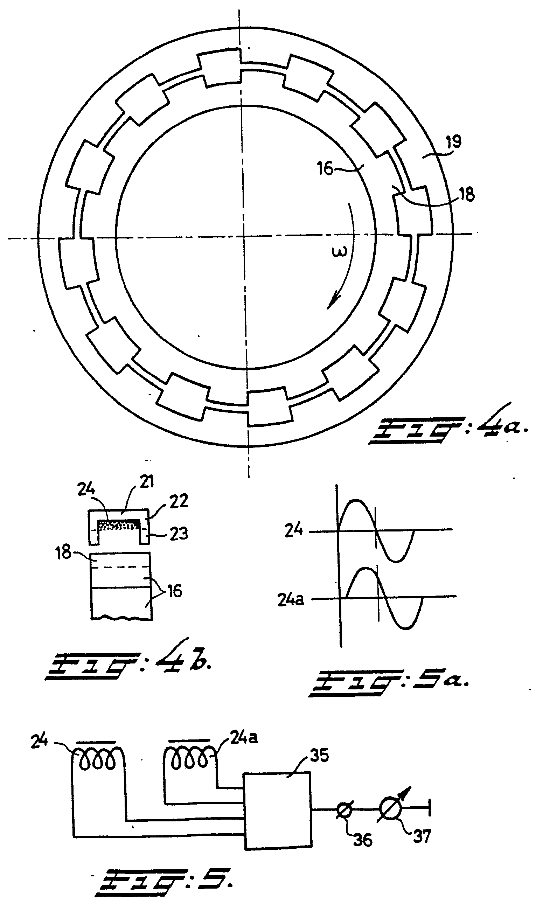

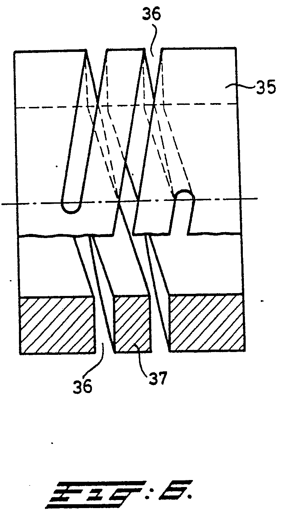

The circumferential incisions are helical. In the shown embodiment there are two incisions which together constitute a double screw; figure 6 shows this in more detail. The starting points of the incisions lie in one plane but are shifted over an angle of 180°; the incisions cover an angle of 360° and have mutually equal pitch. The material which remains between the two incisions constitutes the twistable element.

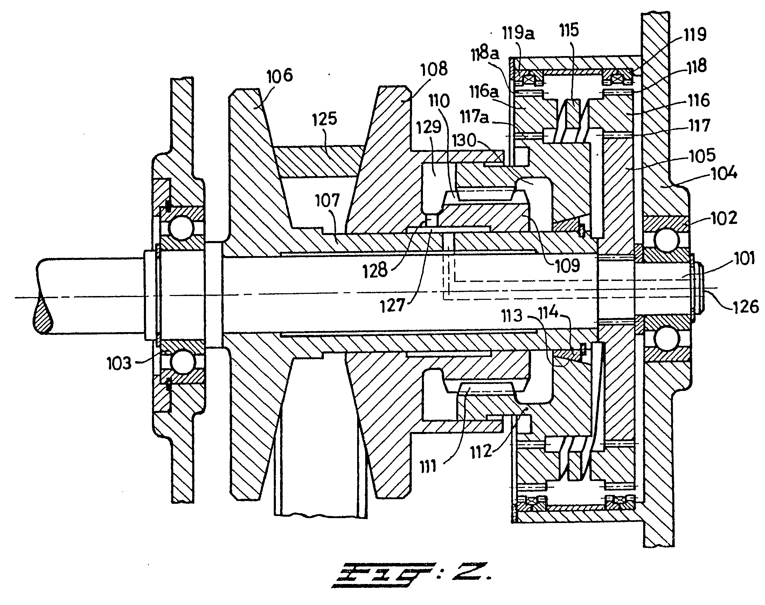

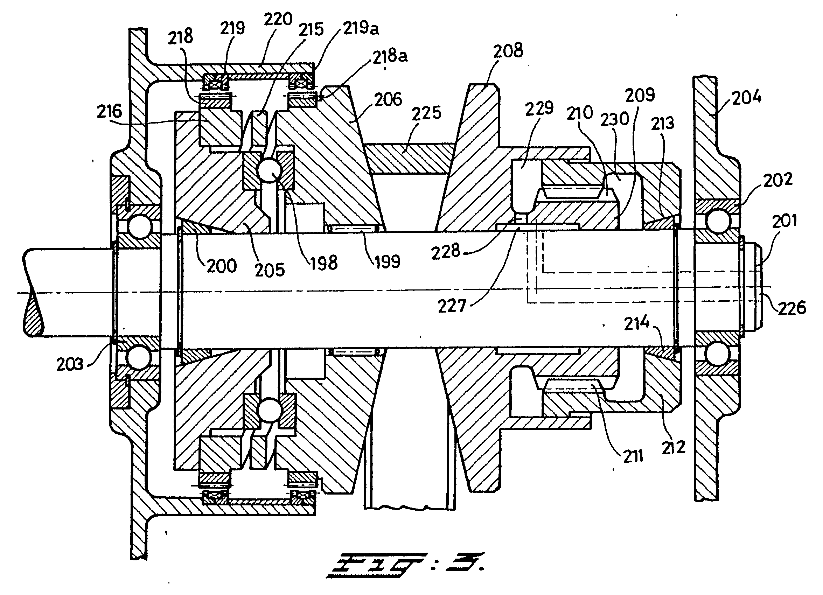

The ringpart 17 carries outer teeth 18 of which the shape is shown in figure 4a and which cooperate with a toothring 19, also shown in figure 4a, fixed to the flange 20 of the housing 4. The toothring 19 is in cross section U-shaped with a bottom 21 and protruding legs 22 in which the teeth 23 are formed; within the space enclosed by the legs 22 is provided a winding 24. The turns

thereof are, as figure 4b shows, directed in the circumferential direction.

The conical disk 6 also carries a tooth ring, denoted with reference numeral 18a and cooperating with the outer toothring 19a; shape and dimension of the toothrings 18 and 19 on the one hand and 18a, 19a on the other hand are equal.

During operation torque is transmitted by the driving belt 25 to the conical disks 6 and 8; the position of the disks 6 and 8 is determined by the value of the pressure built up in the chamber 29 between the disk 8 and the driver 12 through the bore 26, space 27 and the channel 28; this pressure also acts upon the surface 30 of the driver 12 so that the driver is pressed against the abutment surface 13 and cannot rotate with respect to the bearing bush.

As the conical disk 8 is coupled to the bearing bush and to the disk 6 the total torque, transmitted by the half of the transmission, is transmitted through the interconnecting element 17 to the flange 5 and from there to the shaft 1. During operation this results into a twisting over a certain angle of the interconnecting element 15 so that the mutual angular position of the toothrings 18 and 19 will differ from the situation shown in figure 4a. The result is that the alternating voltages induced into the windings 24 and 24a, of which the frequency is determined by the rotational speed of the toothrings, shows a phase difference (vide Figure 5a) and said phase difference is a measure of the torque transmitted by the CVT-half. By means of a circuit 35 which is known in itself this phase difference is converted into a signal at the output 36 thereof which is a measure of the transmitted torque and which can, for instance, be indicated with a measuring instrument 37.

The embodiment according to figure 2 corresponds in principle to the one according to figure 1; the difference is that the twistable interconnecting element is here provided at the end of the axially movable conical disk. In this embodiment, too, the total torque, transmitted by the CVT-half is measured. The shaft 101 is carried by the bearings 102, 103 respectively in the housing 104; at the righthand end the shaft carries the flange 105 fixed thereto and at the other hand the rotatable but not shiftable conical disk 106 having a bearing bush 107 on which is provided, shiftable in axial direction, the conical disk 108. This disk is provided with the bush 109 carrying the radially outwardly detected teeth 110 cooperating with the radially inwardly directed teeth 111 of the carrier 112 which through the abutment surface 113 is pressed to the conical ring 114. The twistable interconnecting element 115 is present between the ring 116 which is, at 117, fixed to the flange 105 and the ring 116a which is, at 117a, fixed to the carrier 112. The ring 116 is provided with teeth 118 cooperating with the outer toothring 119 while the ring 116a is provided with teeth 118a cooperating with the outer toothring 119a. The operation corresponds to the one of the embodiment according to figure 1: pressure medium is supplied through the channel 126, the space 127 and the channel 128 to the chamber 129 and the chamber 130; thus the position of the conical disks 106 and 108 respectively, between which lies the driving belt 128, and therewith the transmission ratio, is set. As the disks 106 and 108 are non-rotatably coupled to each other the entire torque is transmitted through the twistable interconnecting element 115 and determined from the difference in angular position between the toothrings 118 and 118a.

Figure 3 shows an embodiment which is more simple than the preceding embodiments but which, however, only measures half the torque transmitted to a conical disk which is shiftable but non-rotatable coupled to the shaft. In this embodiment the shaft 201 is supported in the housing 204 by the bearings 202, 203; the shaft carries the flange 205 through a conical pressure ring 200 and, through the needle bearing 199, the conical disk 208 which cannot shift in axial direction. The adjustable and shiftable disk 208 is solid with the bush 209 having teeth 210 cooperating with the teeth 211 of a driver 212 which through the abutment surface 213 is connected to the conical ring 214. Between the flange 205 and the disk 206 is the axial bearing 198 and the twistable interconnecting element 215 of which the ringpart 216 is connected to the flange 205. The conical disk 206 carries a toothring 218a cooperating with the toothring 219a and the ring 216 carries the toothring 218 cooperating with the toothring 219. The rings 219, 219a are carried by the flange 220 of the housing 204.

Pressure medium is supplied through the channel 226, the space 227 and the channel 228 to the chamber 229 and the chamber 230. During operation the driving belt 225 is clamped between the disks 206 and 208; the pressure exerted by the pressure medium has as a result that on the one hand the carrier 212 is via the conical ring 214 clamped to the shaft while on the other hand the flange 205 through the conical ring 200 is also clamped to the shaft.

Of the total torque, transmitted by the driving belt 225, one half is directly transmitted through the conical disk 205 and the carrier 212 to the shaft 201; the other half is transmitted through the conical disk 206, the interconnecting element 215 and the flange 205 to the shaft. This part of the total torque is measured as described hereinbefore.

A small drawback of this embodiment is that during operation the angular position of the conical disks 206 and 208 will be somewhat different.

Figure 6 shows in detail the twistable interconnecting element having a cylindrical part 35 in which incisions 36 are made, leaving free the in-between parts 37. This configuration has the advantage that the twisting is a linear function of the transmitted torque.

## Claims

1. Device for determining the torque transmitted between a set of conical disks (6, 8; 106, 108; 206, 208) of a continuously variable transmission and the shaft (1, 101, 201) thereof, comprising an interconnecting element (15, 115, 215) interconnected between the set of conical disks (6, 8; 106, 108; 206, 208) on the one hand and the shaft (1,101,201) on the other hand, characterised in that said element (15, 115, 215) consists of a cylindrical bush (35) provided with circumferential incisions (36) whcih is twistable over a restricted angle and in that two toothrings (18, 18a; 118, 118a; 218, 218a) with radially outwardly directed teeth, are provided coaxial with this element (15, 115, 215) and connected to the respective ends thereof, which are each enclosed by an opposite, in cross-section U-shaped stationary toothring (19, 19a; 119, 119a; 219, 219a) provided with a winding (24) of which the turns run into the circumferential direction.

2. Continuously variable transmission provided with a device according to claim 1 characterized in thast the interconnecting element (15) is provided between a first conical disk (6), which carries the first toothring (18a) and is rotatable but axially non-shiftable with respect to the shaft (1) and on the other hand a flange (5), which is fixed to the shaft and also carries a toothring (18) (Figure 1).

3. Continuously variable transmission according to claim 2, characterized in that the axially shiftable second conical disk (8) is rotatable carried by a bearing bush (7) connected to the first disk (6) and enclosing the shaft (1), and coupled to a driver (12) permitting an axial movement of the second conical disk (8) (Figure 1).

4. Continuously variable transmission according to claim 3 characterized in that the second conical disk (8) carries a cylinderpart coaxial with the bearing bush, of which the inner surface sealingly cooperates with the outer surface of a cylindrical part of the driver (12), coaxial with the bearing bush said driver (12) being provided with driving elements (11) cooperating with the conical disk and with an end flange having a central opening with tapering surface (13) fitting on a carrier ring (14) with tapering outer surface and locked on the bearing bush, such that during operation pressure medium is supplied to the chamber (29) between the second conical disk and the front surface of the driver (Figure 1).

5. Continuously variable transmission provided with a device according to claim 2, characterized in that the axially shiftable second conical disk (208) is non-rotatable coupled to the shaft (201) by means of a driver (212) fixed to said shaft (201) (Figure 3).

6. Continuously variable transmission according to claim 5 characterized in that the second conical disk (208) carries a cylinderpart coaxial with the shaft (201) of which the inner surface sealingly cooperates with the outer circumference of a with the bearing bush coaxially cylindrical part of the driver (212) which is provided with driving elements (211) cooperating with the conical disk (208) and with an end flange having a central opening with tapering surface (213) fitting to a carrying ring (214) with tapering outer surface which is locked to the shaft (201), while during operation pressure medium is supplied to the chamber (229) between the second conical disk and the front wall of the driver (Figure 3).

7. Continuously variable transmission according to claim 2 characterized in that the first conical disk (106) is fixedly connected to a bearing bush (107) which is rotatable but not shiftable with regard to the shaft (101), said bearing bush (107) carrying the shiftable second conical disk (108) which through a driver (112) is coupled to a first flange fixed to the bearing bush (107), said flange carrying a first toothring (118a) and being coupled, through the interconnecting element (115), to a flange (105) fixed to the shaft and carrying the second toothring (Figure 2).

8. Continuously variable transmission according to claim 7 characterized in that the second conical disk (108) carries a cylinderpart coaxial with the bearing bush (107), the inner surface of said cylinderpart cooperating sealingly with the outer circumference of a cylinderpart of the driver (112) coaxial with the bearing bush (107), said driver (112) being provided with driving elements (111) cooperating with the conical disk (108), the first flange being provided with a central opening with tapering surface (113) fitting to a carrying ring (114) with tapering outer surface locked to the bearing bush (107) while during operation pressure medium is supplied to the chamber (129) between the second conical disk and the front wall of the driver (Figure 2).

## Patentansprüche

1. Vorrichtung zur Ermittlung des Drehmoments, das zwischen einem Satz konischer Scheiben (6, 8; 106, 108; 206, 208) und der Welle (1, 101, 201) eines stufenlosen Riemenverstellgetriebes übertragen wird, mit einem Verbindungselement (15, 115, 215), das als Verbindung zwischen dem Satz der konischen Schieben (6, 8; 106, 108; 206, 208) einerseits und der Welle (1, 101, 201) andererseits dient, dadurch gekennzeichnet, daß das Verbindungselement (15, 115, 215) aus einer zylindrischen Buchse (35) mit am Umfang angeordneten Einschnitten (36) besteht, die über einem Winkel verwindbar ist, und daß zwei Zahnkränze (18, 18a; 118, 118a; 218, 218a) mit radial nach außen gerichteten Zähnen koaxial zu diesem Verbindungselement (15, 115, 215) angeordnet sind und mit je einem der beiden Enden des Verbindungselementes (15, 115, 215) in Verbindung stehen, die jeweils von einem gegenüberliegenden, einem U-förmigen Querstück aufweisenden stationären Zahnkranz (19, 19a; 119, 119a; 219, 219a) umgeben sind, der eine Wicklung (24) einschließt, deren Windungen in Umfangsrichtung verlaufen.

2. Stufenloses Verstellgetriebe, daß mit einer Vorrichtung gemäß Anspruch 1 ausgestattet ist, dadurch gekennzeichnet, daß das Verbindungselement (15) zwischen einer ersten konischen Scheibe (6) einerseits, die den ersten Zahnkranz (18a) trägt und im Verhältnis zur Welle (1) drehbar, jedoch axial nicht verschiebbar ist, und einem Flansch (5) andererseits, der mit der Welle (1) drehfest verbunden ist und ebenfalls einen Zahnkranz (18) trägt (Fig. 1), angeordnet ist.

3. Verstellgetriebe nach Anspruch 2, dadurch gekennzeichnet, daß die axial verschiebbare, zweite konische Scheibe (8) in ihrer drehbaren Ausführung von einer Lagerbuchse (7), die mit der ersten Scheibe (6) verbunden ist und die Welle (1) umgibt, getragen wird und mit einem Mitnehmer (12) in drehfester Verbindung steht, so daß eine axiale Bewegung der zweiten konischen Schiebe (8) möglich ist (Fig. 1).

4. Verstellgetriebe nach Anspruch 3, dadurch gekennzeichnet, daß die zweite konische Scheibe (8) einen zylindrischen Abschnitt koaxial zur Lagerbuchse (7) hat, dessen Innenfläche in abdichtender Ausführung mit der Außenfläche eines zylindrischen Abschnitt des Mitnehmers (12) koaxial zur Lagerbuchse (7) zusammenwirkt, wobei der Mitnehmer (12) mit Kupplungselementen (11), die mit der konischen Scheibe (8) zusammenwirken, und einem Endflansch versehen ist, der eine zentrale Öffnung mit einer konisch zulaufenden Innenfläche (13) aufweist, die passend zu einem Trägerkranz (14) mit konisch zulaufender Außenfläche ausgebildet ist, welcher mit der Lagerbuchse (7) drehfest ist, wobei während des Betriebs ein Druckmedium in eine zwischen der zweiten konischen Scheibe (8) und der Vorderseite des Mitnehmers (12) gebildete Kammer (29) (Fig. 1) eingeleitet wird.

5. Verstellgetriebe, das mit einer Vorrichtung nach Anspruch 2 ausgestattet ist, dadurch gekennzeichnet, daß die axial verschiebbare, zweite konische Scheibe (208) in nicht drehbarer Ausführung mit der Welle (201) über einen Mitnehmer (212) verbunden ist, der mit der Welle (201) drehfest verbunden ist (Fig. 3).

6. Verstellgetriebe nach Anspruch 5, dadurch gekennzeichnet, daß die zweite konische Scheibe (208) einen zylindrischen Abschnitt (238) koaxial zur Welle (201) aufweist, dessen Innenfläche in abdichtender Ausführung mit dem Außenumfang eines koaxialen zylindrischen Abschnitts des Mitnehmers (212) zusammenwirkt, der Kupplungselemente (211), die mit der konischen Scheibe (208) zusammenwirken, und einen Endflansch aufweist, der eine zentrale Öffnung mit einer konisch zulaufenden Innenfläche (213) besitzt, die passend zu einem Trägerkranz (214) mit einer konisch zulaufenden Außenfläche ausgebildet ist, der mit der Welle (201) verbunden ist, wobei im Betrieb in eine zwischen der zweiten konischen Scheibe (208) und der Vorderseite des Mitnehmers (212) ausgebildete Kammer (229) (Fig. 3) ein Druckmedium eingeleitet wird.

7. Verstellgetriebe nach Anspruch 2, dadurch gekennzeichnet, daß die erste konische Scheibe (106) fest mit einer Lagerbuchse (107) verbunden ist, die im Verhält- nis zur Welle (101) drehbar, jedoch nicht axial verschiebbar ist, wobei diese Lagerbuchse (107) die axial verschiebbare, zweite konische Scheibe (108) trägt, die über den Mitnehmer (112) mit einem ersten Kranz (116a) verbunden ist, der mit der Lagerbuchse (107) drehfest ist, wobei der Kranz (116a) einen ersten Zahnkranz (118a) trägt und über das Verbindungselement (115) mit einem Radialflansch (105) verbunden ist, der mit der Welle (101) drehfest ist und den zweiten Zahnkranz (118) (Fig. 2) trägt.

8. Verstellgetriebe nach Anspruch 7, dadurch gekennzeichnet, daß die zweite konische Scheibe (108) einen zylindrischen Abschnitt (138) koaxial zur Lagerbuchse (107) hat, wobei die Innenfläche dieses Abschnittes (138) in abdichtender Ausführung mit dem Außenumfang eines zylindrischen Abschnitts des Mitnehmers (112) koaxial zur Lagerbuchse (107) zusammenwirkt und der Mitnehmer (112) mit Kupplungselementen (111) ausgestattet ist, die mit der konischen Scheibe (108) zusammenwirken, wobei der Mitnehmerendflansch mit einer zentralen Öffnung mit einer konisch zulaufenden Innenfläche (113) versehen ist, die passend zu einem Trägerkranz (114) mit einer konisch zulaufenden Außenfläche ausgebildet ist, der mit der Lagerbuchse (107) fest verbunden ist, wobei im Betrieb der Kammer (129) zwischen der zweiten konischen Scheibe (108) und der Vorderseite des Mitnehmers (112) (Fig. 2) ein Druckmedium zugeführt wird.

**Revendications**

1. Dispositif pour déterminer le couple transmis entre un jeu de disques coniques (6, 8; 106, 108, 206, 208) d'une transmission variable en continu et son arbre (1, 101, 201), comprenant un élément d'interconnexion (15, 115, 215) interconnecté entre le jeu de disques coniques (6, 8; 106, 108; 206, 208) d'une part et l'arbre (1, 101, 201) d'autre part, caractérisé en ce que ledit élément (15, 115, 215) consiste en un manchon cylindrique (35) comportant des incisions circonférentielles (36) qui peut subir une torsion d'un angle limité; et en ce que deux anneaux dentés (18, 18a; 118, 118a; 218, 218a), à dents dirigées radialement vers l'extérieur, sont prévus coaxialement à cet élément (15, 115, 215) et connectés à ses extrémités respectives, chacun de ces anneaux étant entouré par un anneau denté fixe opposé (19, 19a; 119, 119a; 219, 219a) à section transversale en forme de U, comportant un enroulement (24) dont les spires sont disposées dans la direction circonférentielle.

2. Transmission variable en continu comportant un dispositif suivant la revendication 1, caractérisée en ce que l'élément d'interconnexion (15) est prévu entre un premier disque conique (6), qui porte le premier anneau denté (18a) et qui peut tourner mais non coulisser axialement par rapport à l'arbre (1), et d'autre part une bride (5) qui est fixée à l'arbre et porte également un anneau denté (18) (figure 1).

3. Transmission variable en continu suivant la revendication 2, caractérisée en ce que le deuxième disque conique axialement coulissant (8) est supporté de façon tournante par un manchon de portée (7), connecté au premier disque (6) et entourant l'arbre (1), et relié à une pièce de commande (12) permettant un mouvement axial du deuxième disque conique (8) (figure 1).

4. Transmission variable en continu suivant la revendication 3, caractérisée en ce que le deuxième disque conique (8) porte une partie cylindrique, coaxiale au manchon de portée, dont la surface intérieure coopère de façon étanche avec la surface extérieure d'une partie cylindrique de la pièce de commande (12), coaxiale au manchon de portée, ladite pièce de commande (12) comportant des éléments d'entraînement (11), qui coopèrent avec le disque conique, et une bride d'extrémité ayant une ouverture centrale à surface conique (13) qui s'ajuste sur un anneau porteur (14) à surface extérieure conique et bloqué sur le manchon de portée, de sorte que, pendant le fonctionnement, un fluide sous pression est envoyé à la chambre (29) entre le deuxième disque conique et la surface avant de la pièce de commande (figure 1).

5. Transmission variable en continu comportant un dispositif suivant la revendication 2, caractérisée en ce que le deuxième disque conique axialement coulissant (208) est relié de façon non tournante à l'arbre (201) au moyen d'une pièce de commande (212) fixé audit arbre (20) (figure 3).

6. Transmission variable en continu suivant la revendication 5, caractérisée en ce que le deuxième disque conique (208) porte une partie cylindrique, coaxiale à l'arbre (201), dont la surface intérieure coopère de façon étanche avec la circonférence extérieure d'une partie de la pièce de commande (212) coaxialement cylindrique avec le manchon de portée, la pièce de commande comportant des éléments d'entraînement (211), qui coopèrent avec le disque conique (208), et une bride d'extrémité à ouverture centrale présentant une surface conique (213) qui s'ajuste sur un anneau porteur (214) à surface extérieure conique qui est bloqué sur l'arbre (201) lorsque, pendant le fonctionnement, un fluide sous pression est envoyé à la chambre (229) entre le deuxième disque conique et la paroi avant de la pièce de commande (figure 3).

7. Transmission à varirable continue suivant la revendication 2, caractérisée en ce que le premier disque conique (106) est relié de façon fixe à un manchon de portée (107) qui peut tourner mais non coulisser par rapport à l'arbre (101), ledit manchon de portée (107) portant le deuxième disque conique coulissant (108) qui est relié par l'intermédiaire d'une pièce de commande (112) à une première bride fixée au manchon de portée (107), ladite bride portant un premier anneau denté (118a) et étant accouplée, par l'intermédiaire de l'élément d'interconnexion (115), à une bride (105) fixée à l'arbre et portant le deuxième anneau denté (figure 2).

8. Transmission variable en continu suivant la revendication 7, caractérisée en ce que le deuxième disque conique (108) porte une partie cylindrique coaxiale avec le manchon de portée (107), la surface intérieure de la dite partie cylindrique coopérant de façon étanche avec la circonférence extérieure d'une partie cylindrique de la pièce de commande (112), coaxiale avec le manchon de portée (107), ladite pièce de commande (112) comportant des éléments d'entraînement (111) qui coopèrent avec le disque conique (108), la première bride comportant une ouverture centrale à surface conique (113) qui s'ajuste sur un anneau porteur (114) à surface extérieure conique bloqué sur le manchon de portée (107) lorsque, pendant le fonctionnement, le fluide sous pression est envoyé à la chambre (120) enbtre le deuxième disque conique et la paroi avant de la pièce de commande (figure 2).

Fig:1.

0 156 402

FIG. 2.

*FIG: 3.*

FIG:4a.

FIG:4b.

FIG:5a.

FIG:5.

36

35

36

37

$$\overline{\underline{\underline{\Xi}}}\underline{\underline{1}}\overline{\underline{\underline{G}}} : \overline{\underline{\underline{6}}}.$$